# FASCICULE DE BREVET EUROPEEN

(11) **EP 0 675 338 B1**
(45) Date de publication et mention de la délivrance du brevet: **28.07.1999**
(21) Numéro de dépôt: 95400687.0
(22) Date de dépôt: 28.03.1995
(51) Int. Cl.: G01B 11/30, G01N 21/89

(54) **Procédé et dispositif pour mesurer la qualité optique de la surface d'un objet transparent**
Verfahren und Vorrichtung zum Messen der optischen Qualität der Oberfläche eines durchsichtigen Gegenstandes
Method and device for measuring optical quality of the surface of a transparent object

(30) Priorité: 31.03.1994 FR 9403831
(43) Date de publication de la demande: 04.10.1995
(73) Titulaire: SAINT-GOBAIN VITRAGE, 92400 Courbevoie (FR)
(72) Inventeur: Guering, Paul Henri, F-75013 Paris (FR); Gayout, Patrick, F-93220 Gagny (FR)
(74) Mandataire: Muller, René

(56) Documents cités:
- EP-A- 0 463 940
- US-A- 4 645 337
- PATENT ABSTRACTS OF JAPAN vol. 12, no. 199 (P-714) 9 Juin 1988 & JP-A-63 001 909 (SEIKO EPSON CORP.)
- PATENT ABSTRACTS OF JAPAN vol. 17, no. 536 (P-1620) 27 Septembre 1993 & JP-A-05 149 732 (HITACHI MAXELL LTD.)

## Description

L'invention concerne la mesure de la qualité optique de la surface d'un objet transparent. Elle est plus particulièrement adaptée à la mesure de la surface du verre plat et plus spécialement de celui qui est destiné à être associé à un verre homologue pour faire un assemblage feuilleté.

Chaque fois que l'on veut faire jouer un rôle optique à la surface d'un objet transparent on cherche à disposer de méthodes pour évaluer la qualité optique de cette surface et d'elle seule.

Ainsi, si l'on souhaite réaliser un miroir plan de grande précision par exemple pour fabriquer un héliostat à partir d'un verre flotté, on cherchera, en particulier, s'il s'agit d'un miroir face avant, à évaluer la qualité optique de la surface destinée à être argentée.

De même, dans la fabrication d'un pare-brise d'automobile feuilleté qui, dans une voiture moderne, est très incliné, on cherche à associer deux à deux des plaques dont la forme est telle que la matière plastique transparente entre elles ait une épaisseur aussi constante que possible de manière à éviter un effet de lentille. Ici, il est important de connaître les irrégularités de chaque surface pour que l'association soit bénéfique et pour éviter de dégrader la qualité optique en transmission des plaques de verre seules.

Egalement, dans le domaine des écrans plats, en particulier ceux qui utilisent la technique des cristaux liquides, on désire mettre en vis-à-vis deux plaques de verre mince dont la géométrie de surface soit compatible. Il est important en effet que les variations d'épaisseur de l'intercalaire en plasma ou en matériau nématique restent limitées.

Des méthodes et des dispositifs pour mesurer en réflexion la qualité optique d'objets transparents et en particulier de plaques, sont connus. Le brevet US 4 585 343, par exemple, montre un système d'évaluation en continu de la planéité de feuilles de verre à leur sortie d'un four de trempe à plat. Un faisceau de lumière approximativement parallèle est dirigé perpendiculairement à la plaque et l'on contrôle sa variation de convergence après réflexion. Un tel système ne fournit qu'une information globale, et il est impossible de savoir ce qui, dans la mesure, est dû à chacune des faces ou éventuellement à des défauts de pâte du verre. Par ailleurs la précision de la méthode et son pouvoir de résolution spatial seraient insuffisants pour mesurer un verre flotté qui n'a pas été soumis à un traitement de trempe.

Des méthodes de mesure optique ont été spécialement développées pour obtenir une information sur la qualité de chacune des surfaces d'une plaque transparente, indépendamment l'une de l'autre. Le brevet français FR-B-2 153 817 propose entre autres une méthode de mesure de la qualité optique d'un échantillon en suivant le déplacement d'un pinceau lumineux, la source et le détecteur étant situés du même côté. Pour séparer les faisceaux réfléchis par les deux faces et éliminer celui réfléchi par la face arrière, il est proposé d'utiliser une incidence oblique et de placer un écran sur le trajet du deuxième faisceau. Cette technique oblige ainsi à utiliser une incidence oblique. Une autre possibilité, simplement évoquée, consiste à "immerger la deuxième face dans un liquide de même indice que le verre".

Un autre document, EP-A-0 485 043 utilise deux pinceaux parallèles incidents et un balayage des quatre faisceaux réfléchis, l'analyse du signal permettant alors de sélectionner les deux pinceaux réfléchis par la face avant.

Les deux méthodes précédentes présentent les mêmes inconvénients : la mesure n'est effectuée que dans une seule direction et il faut un déplacement relatif très précis (vitesse constante) entre l'échantillon à mesurer et l'appareil.

Le principe de la séparation des faisceaux des méthodes précédentes, du fait de la nécessité d'employer des pinceaux lumineux étroits, ne peut s'appliquer à l'ombroscopie, méthode globale très intéressante car elle permet de détecter le défaut le plus important quelle que soit sa position et sa direction. Autre avantage, l'ombroscopie ne nécessite pas de mouvement relatif entre l'échantillon et les appareils de mesure.

Un autre document, US 3 857 637 propose également de mettre l'échantillon en mouvement dans son plan et de suivre le déplacement d'un faisceau réfléchi. Pour éviter la réflexion arrière, la technique proposée consiste à recouvrir la face arrière de l'échantillon avec un revêtement absorbant la lumière tel qu'une peinture sombre. Cette technique qui peut trouver des applications au laboratoire ne permet pas d'effectuer des contrôles de production rapides et non destructifs.

On connaît également dans l'art antérieur plusieurs méthodes pour juger si deux plaques de verre destinées à être assemblées l'une avec l'autre par l'intermédiaire d'une résine transparente possèdent des surfaces de forme complémentaire ou non.

Le document US 4 837 449 regarde le parallélisme des surfaces internes vis à vis dans un assemblage de deux plaques. La position d'un faisceau laser traversant l'assemblage est comparé à celle du faisceau qui a été réfléchi successivement par les deux surfaces destinées à être en contact avec la résine intercalaire avant de traverser la seconde plaque.

Un autre document WO 90/02310 propose un détecteur d'écart ("gap detector") qui permet de balayer avec un faisceau laser un assemblage de deux plaques et d'étudier la trace des faisceaux réfléchis qui se recouvrent quand les verres sont parallèles et s'écartent l'un de l'autre s'il y a un espace localisé entre eux. Cette méthode nécessite un grand nombre de caméras pour "ausculter" un vitrage entier, par ailleurs, la mesure ne peut s'effectuer que dans une seule direction, celle perpendiculaire à la direction du balayage.

Les deux méthodes précédentes permettent de porter un jugement sur l'assemblage de deux plaques transparentes déjà associées l'une à l'autre mais l'on voudrait disposer d'une méthode permettant de classer des plaques pour savoir d'avance lesquelles seront susceptibles d'être accouplées tout en restant à un niveau de qualité acceptable.

L'invention se donne pour tâche de fournir une méthode de détermination de la qualité optique de la surface d'une plaque transparente sans que la qualité de l'autre face ou de la pâte de la plaque elle-même n'interviennent dans la détermination.

Fait également partie du but de l'invention, de trouver une méthode de mesure de la qualité optique de la surface d'un milieu transparent qui soit globale c'est-à-dire qui concerne toute la surface et qui mesure les défauts optiques, quelle que soit leur direction.

L'invention doit également fournir une méthode et un dispositif de détermination de la qualité optique de la surface d'une plaque transparente de manière à permettre la prévision de la qualité optique du produit final, après association de ladite plaque avec une autre dont les caractéristiques seront également connues grâce à l'invention.

L'invention propose un procédé de mesure de la qualité optique de la surface d'une plaque transparente comportant deux surfaces sensiblement parallèles dans lequel la mesure se fait avec une source de lumière du même côté de la plaque que la surface à mesurer et dans lequel la deuxième surface est en contact optique avec un autre milieu et dans lequel enfin, l'autre milieu est un matériau souple mouillé par un liquide d'indice. Avantageusement, l'indice du liquide et celui de la plaque transparente ne sont pas identiques et leur différence rapportée à l'indice de la plaque est comprise entre 1 et 20 % et de préférence inférieure à 15 %. En particulier, dans le cas de plaques en verre silico-sodo-calcique, le liquide d'indice peut être de l'eau.

Grâce à ce procédé l'évaluation de la qualité optique de la seule surface avant d'une plaque ou d'un milieu transparent peut se faire avec toutes les méthodes usuelles pour la détermination de la qualité optique d'une plaque telles qu'elles sont utilisées en transmission, la seule différence étant que la source de lumière et le détecteur quels qu'ils soient, au -lieu d'être de part et d'autre de la plaque, se trouvent du même côté.

Les moyens de l'invention sont simples et bon marché.

Selon l'invention, ou bien la source de lumière est localisée et l'on évalue l'ombre obtenue en réflexion, ou bien la source de lumière engendre un pinceau ou un faisceau étroit de lumière dont on mesure les déviations après réflexion sur la surface à mesurer.

Ainsi tous les procédés connus de mesure de la qualité optique des vitrages sont transposables en réflexion et permettent alors grâce à l'invention d'effectuer une mesure de la seule surface avant d'une plaque transparente.

L'invention prévoit également l'application du procédé à la sélection de plaques transparentes destinées à être assemblées à l'aide d'une résine, en particulier pour la réalisation de vitrages destinés à équiper des véhicules et spécialement des automobiles et des avions. Elle prévoit également l'application du procédé à la réalisation d'écrans plats. Dans ces cas, on détermine en chaque point des plaques transparentes à assembler une grandeur optique de chacune des surfaces destinées à être face à face et on combine les valeurs mesurées en des points homologues pour obtenir la grandeur optique prévue. De préférence, la grandeur optique est la puissance et la combinaison, une addition.

Le procédé de l'invention permet ainsi, à la différence des méthodes antérieures, de mesurer chaque plaque seule et par conséquent d'accoupler deux plaques sélectionnées de manière à limiter au maximum les défauts optiques en transmission du vitrage terminé.

L'invention propose également un dispositif pour la mise en oeuvre du procédé, il comporte un tissu tendu, imprégné du liquide d'indice, en contact avec lequel on a placé la surface de la plaque transparente opposée à la surface à mesurer, de préférence le tissu est de couleur foncée, noire par exemple. Dans le cas d'une plaque en mouvement, telle qu'une plaque de verre ou un ruban de verre en déplacement dans son plan, c'est une surface déformable en un matériau souple ou poreux mouillée par le liquide d'indice qui assure le contact avec la surface opposée à la surface à mesurer. La surface déformable est par exemple celle d'un rouleau qui est en rotation et dont la vitesse de déplacement superficiel au contact de la plaque en mouvement est du même ordre que celle de ladite plaque.

Dans une variante, la mesure optique est faite avec une source de lumière ponctuelle qui produit l'ombre de la surface à mesurer sur un écran et une caméra CCD qui évalue l'image projetée.

Avec la technique retenue pour cette méthode de mesure, les moyens nécessaires sont particulièrement simples en particulier parce qu'aucun déplacement relatif de la source et de l'échantillon n'est imposé.

La description qui suit et les figures permettront de comprendre l'invention et d'en apprécier les avantages.

La **figure 1** représente une plaque transparente et le tissu tendu imprégné avec lequel elle sera en contact,

La **figure 2** et la **figure 3** montrent des dispositifs où le matériau poreux ou souple imprégné ou mouillé est en mouvement comme la plaque elle-même.

La **figure 4** enfin montre une installation pour la mesure ombroscopique de la face avant d'une plaque transparente.

Toutes les méthodes connues de mesure de la planéité de la surface d'une plaque transparente utilisent les mêmes techniques que celles développées pour la mesure en transmission de la qualité optique des plaques transparentes. Lorsque ces techniques sont utilisées sans précaution particulière, la mesure fournit une valeur globale qui intègre des défauts de trois origines, ceux qui proviennent des écarts de planéité de chacune des deux surfaces auxquels s'ajoutent les hétérogénéités de pâte de la matière transparente qui constitue la plaque.

Pour ne garder l'information que provenant de la face avant de l'échantillon, il faut éliminer la lumière réfléchie sur la deuxième face. On élimine alors simultanément non seulement l'action de la surface réfléchissante arrière mais également l'effet des défauts de pâte de la plaque. L'examen de l'art antérieur ci-dessus a montré les difficultés liées à l'occultation par un écran du faisceau réfléchi par la deuxième face de l'échantillon. Quant aux méthodes plusieurs fois citées qui consistent à mettre en contact la deuxième face avec un liquide d'indice elles sont le plus souvent simplement évoquées sans même l'amorce d'une réalisation pratique.

Le principe de l'invention est le suivant :
on dispose d'un matériau poreux comme une mousse à pores ouverts ou un tissu ou au moins d'un matériau à surface souple. Le matériau est imprégné ou simplement sa surface mouillée par un liquide dont l'indice est voisin de celui de la plaque à tester. Dans la zone de la plaque à mesurer, on établit un contact étroit entre la surface mouillée et le liquide d'indice. Ainsi les rayons lumineux qui lors de la mesure de la qualité optique en réflexion ont pénétré dans la plaque, au lieu d'être réfléchis par la deuxième surface lorsqu'ils l'atteignent, continuent leur trajet dans le liquide d'indice pour finalement atteindre le matériau-support où ils sont diffusés dans toutes les directions et - au moins partiellement - absorbés. Même si le matériau-support n'est pas très absorbant, dans le cas où l'on mesure la déviation d'un faisceau ou d'un pinceau de lumière, le fait que lors de leur diffusion les rayons subissent un changement de direction aléatoire suffit à neutraliser la seconde réflexion.

En revanche, si l'on utilise une méthode ombroscopique du type de celles décrites pour une mesure en transmission dans les documents EP-A-0 342 127 ou EP-A-0 463 940, le contraste de l'image observé est dégradé par toute lumière parasite et, si le matériau-support du liquide d'indice n'est pas de couleur sombre la mesure pourrait en être plus difficile. C'est pourquoi, dans ce cas, on essaye d'utiliser un matériau coloré de préférence en noir.

Le choix du liquide d'indice se fait comme d'habitude au laboratoire. Ainsi pour des plaques de verre silico-sodo-calcique (indice de réfraction 1,52), on choisira par exemple le diméthylphtalate. Pour une plaque de métacrylate de méthyl (PMMA) on prendra par exemple l'huile de vaseline.

Mais lors des mises au point des techniques de l'invention, on a découvert curieusement que même avec un liquide dont l'indice s'écarte sensiblemement de celui de la plaque, l'effet de la réflexion sur la face arrière de la plaque était éliminé dans la mesure où l'on utilisait les dispositifs de l'invention.

Ceux-ci sont représentés sur les figures.

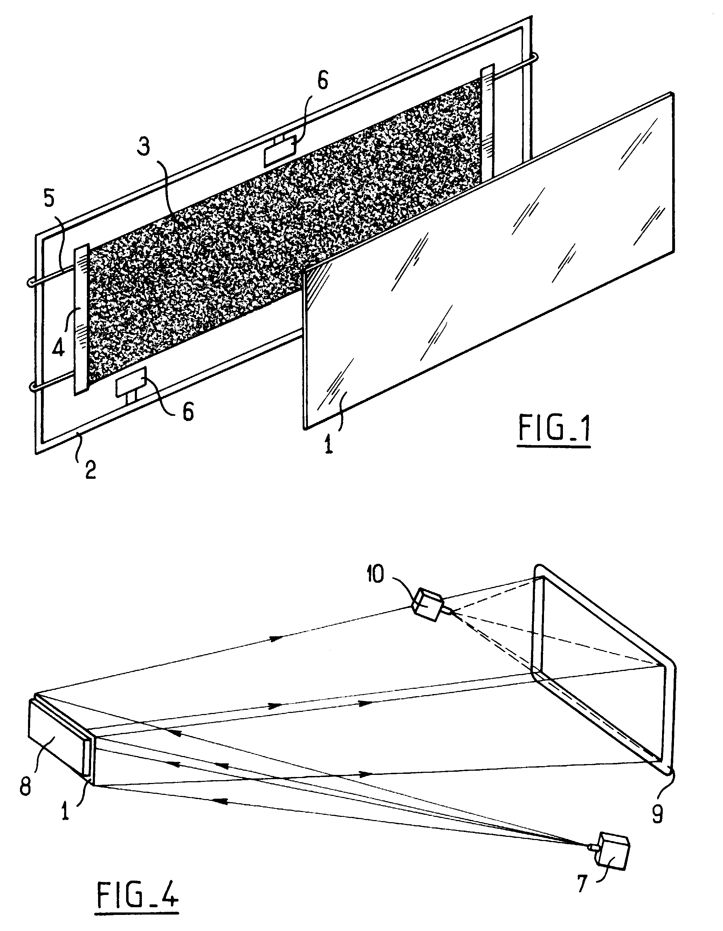

Sur la figure 1, on voit en 1 la plaque de verre. On désire mesurer la qualité optique de sa face dirigée vers l'observateur. Derrière la plaque dont la situation dans l'espace importe peu - elle est ici verticale - on a placé parallèlement à elle, un cadre 2, par exemple en métal.

Dans le cadre 2 est tendu un tissu sombre 3. Le tissu est pincé à ses extrémités dans des baguettes 4 attachées par des moyens élastiques 5 au cadre 2. Le tissu est imprégné du liquide d'indice. Lorsque le tissu est vertical, on dispose avantageusement le long de son bord supérieur une rampe qui distribue le le liquide sur sur toute sa longueur. Un point important à respecter est d'éviter que des bulles d'air restent à l'interface liquide - surface du matériau transparent. Le choix du tissu joue ici un rôle important. Il faut qu'il ne soit pas trop serré pour que l'air puisse s'échapper au travers des mailles du tissu, de même, pour assurer le contact entre la plaque et le liquide, il faut presser régulièrement le tissu sur toute sa surface.

L'invention a prévu pour assurer cette pression, des butées 6 dont le plan est situé légèrement au-delà du plan du tissu lorsqu'il est au repos. Un écart de 2 mm par exemple convient. Ainsi lorsque la plaque 1 repose sur les butées 6 le contact plaque-tissu et donc plaque-liquide d'indice est total.

Avec le dispositif de la figure 1, on a procédé à des mesures d'ombroscopie. L'installation représentée figure 4 reprend tous les éléments de la demande de brevet EP-A-0 463 940.

On voit en 7 un projecteur équipé d'un diaphragme d'un diamètre tel qu'il permet au niveau de la plaque 1 d'avoir un pouvoir de résolution adapté aux dimensions des défauts qu'on veut mesurer (voir le document cité). Le projecteur 7 est situé par exemple à 4 mètres de la plaque 1. Celle-ci est équipée à l'arrière du cadre 2 avec le tissu 3 de la figure 1, le tout est représenté schématiquement sur la figure en 8. L'ombre de la face avant de la plaque 1 est projetée sur l'écran 9 situé lui aussi à 4 m de la plaque 1. L'écran est observé par la caméra CCD 10. En chaque point de l'écran, l'éclairement mesuré est comparé à l'éclairement mesuré et mis en mémoire au début de l'expérience lorsqu'on a remplacé la plaque à mesurer par une plaque d'excellente qualité, par exemple une plaque de glace polie mécaniquement. Cette "mesure de zéro" est destinée à éliminer l'effet des variations d'éclairement dus à la source ponctuelle. La variation d'éclairement mesurée par rapport à la valeur de référence est directement proportionnelle à la puissance optique positive (plus de lumière) ou négative (moins de lumière) du défaut de la surface de la plaque 1. On utilise des étalons pour chiffrer ces valeurs.

Lors des essais avec le dispositif de la figure 1, on a tenté d'éloigner progressivement, avec différents liquides, la valeur de l'indice de réfraction du liquide d'indice de la valeur de l'indice de la plaque. On a alors constaté qu'un écart de 20 % ne perturbait pas les mesures. Avec une plaque de verre industriel (n = 1,52) on a même pu utiliser comme liquide "d'indice", de l'eau pure (n = 1,33) ce qui présente un intérêt pratique évident.

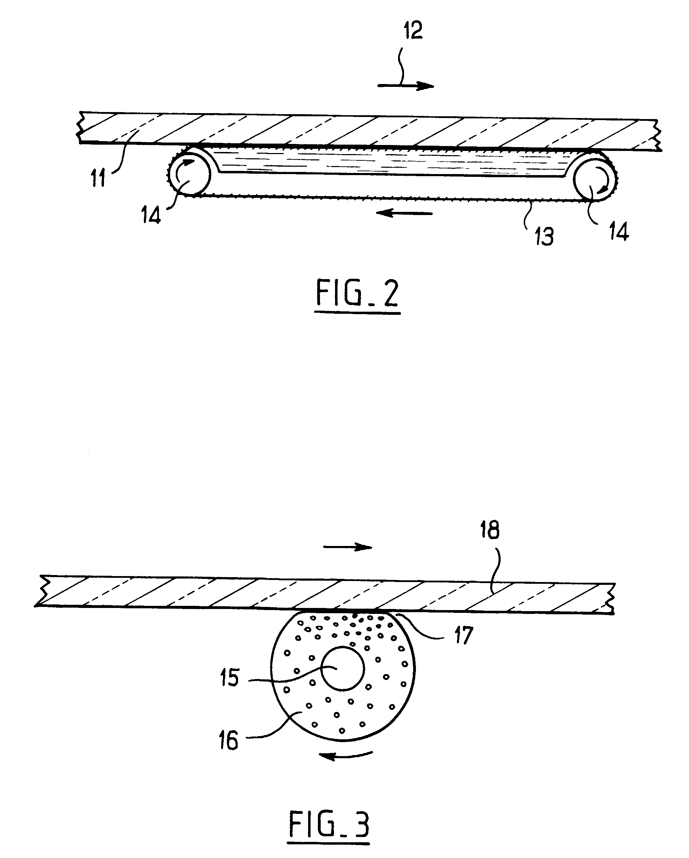

La figure 2 et la figure 3 montrent des dispositifs selon l'invention particulièrement adaptés aussi bien à la mesure "à la défilée" d'un ruban de verre comme du verre flotté, sur une ligne de production qu'à celle des plaques de verre découpées qui avancent avant d'être accouplées pour constituer les deux composantes d'un vitrage automobile feuilleté.

Sur la figure 2, la plaque 11 se déplace dans la direction de la flèche 12. Sous la plaque, une bande de tissu 13 est entraînée par les rouleaux 14. Dans la partie supérieure de son trajet, le tissu 13 est en contact avec de l'eau et en même temps avec la face inférieure de la plaque 11. Les deux vitesses de la plaque et du tissu sont voisines. La mesure optique est effectuée dans la partie supérieure de la figure grâce à l'une des méthodes traditionnelles décrites plus haut.

Une variante du dispositif précédent est montrée figure 3. Un rouleau 15 dont l'axe est parallèle à la plaque et perpendiculaire à sa direction de déplacement est équipé à sa périphérie d'un fourreau en mousse 16 dont la surface est souple. Un dispositif non représenté permet d'humecter la surface de la mousse 16 juste avant qu'elle n'entre au contact en 17 avec la surface inférieure de la plaque 18.

Un dispositif de mesure inspiré de celui du document EP-A-0 342 127 permet d'effectuer une mesure complète de la surface supérieure de la plaque 18 dont la face inférieure se trouve en contact avec la surface souple mouillée.

Mais la technique de mesure de l'invention permet également de sélectionner parmi des plaques de verres, celles qu'il est opportun d'apparier pour obtenir après feuilletage une qualité optique en transmission satisfaisante.

L'une des méthodes de mesure précédentes, par exemple celle de la figure 4 permet de déterminer la puissance optique en chaque point de la surface de chaque plaque. Du fait qu'en général, la résine intercalaire, le plus souvent, du butyral de polyvinyle est homogène et n'introduit pas de défauts optiques dues à la qualité de cette matière, seules ses variations d'épaisseur dues à la qualité des surfaces en vis à vis jouent un rôle dans la qualité optique du produit assemblé. Il suffit alors d'ajouter en chaque point homologue sur les deux surfaces les valeurs de puissance mesurées pour obtenir la "carte" des puissances optiques en transmission attendues pour le vitrage assemblé. Si en un endroit la valeur attendue dépasse une limite qu'on s'est fixé, l'opération s'arrête et on évite ainsi de procéder inutilement à des opérations industrielles chères. Par ailleurs, il est possible de tenter une nouvelle alliance où chacune des plaques va se trouver associée avec une plaque qui a une répartition de défauts différente ce qui pourra permettre au nouveau couple d'aboutir à un meilleur résultat.

## Revendications

1. Procédé de mesure de la qualité optique de la surface d'une plaque transparente comportant deux surfaces approximativement parallèles dans lequel la mesure se fait avec une source de lumière du même côté de la plaque que la surface à mesurer et dans lequel la deuxième surface est en contact optique avec un autre milieu, **caractérisé en ce que** l'autre milieu est un matériau souple mouillé par un liquide d'indice.

2. Procédé selon la revendication 1, **caractérisé en ce que** l'indice du liquide et celui de la plaque transparente ne sont pas identiques **et en ce que** leur différence rapportée à l'indice de la plaque est comprise entre 1 et 20 % et de préférence inférieure à 15 %.

3. Procédé selon la revendication 2, **caractérisé en ce que** la plaque est en verre silico-sodo-calcique **et en ce que** le liquide d'indice est de l'eau.

4. Procédé selon l'une des revendications précédentes, **caractérisé en ce que** la source de lumière est localisée **et en ce qu**'on évalue l'ombre obtenue en réflexion.

5. Procédé selon l'une des revendications 1 à 3, **caractérisé en ce que** la source de lumière engendre un pinceau ou un faisceau étroit de lumière dont on mesure les déviations après réflexion sur la surface à mesurer.

6. Application du procédé selon l'une des revendications précédentes à la sélection de plaques transparentes destinées à être assemblées à l'aide d'une résine et/ou pour constituer un écran plat.

7. Application selon la revendication 6 à la réalisation de vitrages feuilletés destinés à équiper des véhicules et spécialement des automobiles et des avions.

8. Application selon la revendication 6 à la réalisation d'écrans plats notamment à plasma ou à cristaux liquides.

9. Procédé de sélection de plaques transparentes destinées à être assemblées, **caractérisé en ce qu**'on détermine, selon le procédé selon l'une des revendications 1 à 5, en chaque point des plaques transparentes à assembler une grandeur optique et de préférence la puissance optique de chacune des surfaces destinées à être face à face **et en ce qu**'on combine les valeurs mesurées en des points homologues pour obtenir la grandeur optique prévue.

10. Dispositif pour la mise en oeuvre du procédé selon la revendication 1, **caractérisé en ce qu**'il comporte un tissu tendu, imprégné du liquide d'indice, en contact avec lequel on a placé la surface de la plaque transparente opposée à la surface à mesurer.

11. Dispositif selon la revendication 10, **caractérisé en ce que** le tissu est de couleur foncée, de préférence noire.

12. Dispositif pour la mise en oeuvre du procédé selon la revendication 1, **caractérisé en ce qu**'il comporte une surface déformable en un matériau souple ou poreux mouillé par le liquide d'indice qui assure le contact avec la surface opposée à la surface à mesurer d'une plaque en mouvement, telle qu'une plaque de verre ou un ruban de verre en déplacement dans son plan.

13. Dispositif selon la revendication 12, **caractérisé en ce que** la surface déformable est celle d'un rouleau qui est en rotation et dont la vitesse de déplacement superficiel au contact de la plaque en mouvement est du même ordre que celle de ladite plaque.

14. Dispositif selon l'une des revendications 10 à 13, **caractérisé en ce que** la source de lumière est ponctuelle, en ce qu'elle produit l'ombre de la surface à mesurer sur un écran **et en ce qu**'une caméra CCD évalue l'image projetée.

## Patentansprüche

1. Verfahren zum Messen der optischen Qualität der Oberfläche einer zwei annähernd parallele Flächen enthaltenden transparenten Scheibe, in welchem die Messung mit einer Lichtquelle auf derselben Seite der Scheibe wie die auszumessende Fläche erfolgt und sich die zweite Fläche im optischen Kontakt mit einem anderen Medium befindet, **dadurch gekennzeichnet, daß** das andere Medium ein mit einer Indexflüssigkeit befeuchtetes nachgiebiges Material ist.

2. Verfahren nach Anspruch 1, **dadurch gekennzeichnet, daß** die Brechungsindizes von Indexflüssigkeit und transparenter Scheibe ungleich sind **und daß** ihre auf den Brechungsindex der Scheibe bezogenen Differenz 1 bis 20 % und vorzugsweise weniger als 15 % beträgt.

3. Verfahren nach Anspruch 2, **dadurch gekennzeichnet, daß** die Scheibe aus Kalk-Natron-Silicatglas besteht **und daß** die Indexflüssigkeit Wasser ist.

4. Verfahren nach einem der vorhergehenden Ansprüche, **dadurch gekennzeichnet, daß** die Lichtquelle eine lokalisierte ist und der bei Reflexion erhaltene Schatten ausgewertet wird.

5. Verfahren nach einem der Ansprüche 1 bis 3, **dadurch gekennzeichnet, daß** die Lichtquelle einen Lichtstrahl oder ein schmales Lichtbündel erzeugt, wovon die Abweichungen nach Reflexion an der auszumessenden Oberfläche gemessen werden.

6. Anwendung des Verfahrens nach einem der vorhergehenden Ansprüche auf die Auswahl transparenter Scheiben, die mittels eines Harzes und/oder, um einen Flachbildschirm auszubilden, verbunden werden sollen.

7. Anwendung nach Anspruch 6 für die Herstellung von Verbundverglasungen, mit denen Fahrzeuge und insbesondere Autos und Flugzeuge ausgestattet werden sollen.

8. Anwendung nach Anspruch 6 auf die Herstellung von Flachbildschirmen, insbesondere mit Plasma oder Flüssigkristallen.

9. Verfahren zur Auswahl transparenter Scheiben, die miteinander verbunden werden sollen, **dadurch gekennzeichnet, daß** gemäß dem Verfahren nach einem der Ansprüche 1 bis 5 an jedem Punkt der zu verbindenden transparenten Scheiben eine optische Größe, vorzugsweise die Brechkraft, jeder der Flächen bestimmt wird, die sich später gegenüberliegen, **und daß** die Meßwerte der einander entsprechenden Punkte kombiniert werden, um die vorgesehene optische Größe zu erhalten.

10. Vorrichtung zur Durchführung des Verfahrens nach Anspruch 1, **dadurch gekennzeichnet, daß** sie ein mit der Indexflüssigkeit getränktes aufgespanntes Gewebe umfaßt, mit welchem in Kontakt die Fläche der transparenten Scheibe, die der auszumessenden Oberfläche gegenüberliegt, angeordnet wird.

11. Vorrichtung nach Anspruch 10, **dadurch gekennzeichnet, daß** die Farbe des Gewebes dunkel und vorzugsweise schwarz ist.

12. Vorrichtung zur Durchführung des Verfahrens nach Anspruch 1, **dadurch gekennzeichnet, daß** sie eine verformbare Fläche aus nachgiebigem oder porösem Material umfaßt, das mit der Indexflüssigkeit befeuchtet ist und den Kontakt mit der Fläche sicherstellt, die der auszumessenden Oberfläche einer sich bewegenden Scheibe wie einer Glasscheibe oder eines sich in seiner Ebene vorwärtsbewegenden Glasbandes gegenüberliegt.

13. Vorrichtung nach Anspruch 12, **dadurch gekennzeichnet, daß** die verformbare Fläche die einer sich drehenden Walze ist, wobei die Bewegungsgeschwindigkeit der Oberfläche, die sich im Kontakt mit der sich vorwärtsbewegenden Scheibe befindet, dieselbe Größenordnung wie die dieser Scheibe hat.

14. Vorrichtung nach einem der Ansprüche 10 bis 13, **dadurch gekennzeichnet, daß** die Lichtquelle eine punktuelle ist, daß sie den Schatten der auszumessenden Oberfläche auf einem Bildschirm erzeugt **und** eine CCD-Kamera das projizierte Bild auswertet.

## Claims

1. Method of measuring the optical quality of the surface of a transparent sheet having two approximately parallel surfaces, in which the measurement is made with a light source on the same side of the sheet as the surface to be measured and in which the second surface is in optical contact with another medium, characterised in that the other medium is a flexible material wetted by an index liquid.

2. Method according to Claim 1, characterised in that the index of the liquid and that of the transparent plate are not identical and in that their difference in relation to the index of the sheet is between 1 and 20% and preferably less than 15%.

3. Method according to Claim 2, characterised in that the sheet is made of soda-lime-silica glass and in that the index liquid is water.

4. Method according to one of the preceding claims, characterised in that the light source is localised and in that an evaluation is made of the shadow obtained in reflection.

5. Method according to one of Claims 1 to 3, characterised in that the light source generates a pencil or narrow beam of light whose deviations are measured after reflection on the surface to be measured.

6. Application of the method according to one of the preceding claims to the selection of transparent sheets intended to be connected together by means of a resin and/or in order to constitute a flat screen.

7. Application according to Claim 6 to the production of laminated glazing intended to equip vehicles and particularly motor cars and aircraft.

8. Application according to Claim 6 to the production of flat screens, notably plasma or liquid crystal screens.

9. Method of selecting transparent sheets intended to be connected together, characterised in that there is determined, according to the method according to one of Claims 1 to 5, at each point on the transparent sheets to be connected together, an optical quantity and preferably the optical power of each of the surfaces intended to be face to face and in that the values measured at homologous points are combined in order to obtain the expected optical quantity.

10. Device for implementing the method according to Claim 1, characterised in that it comprises a tensioned cloth, impregnated with the index liquid, in contact with which there has been placed the surface of the transparent sheet opposite to the surface to be measured.

11. Device according to Claim 10, characterised in that the cloth is dark in colour, preferably black.

12. Device for implementing the method according to Claim 1, characterised in that it has a deformable surface made of a flexible or porous material wetted by means of the index liquid which provides contact with the surface opposite to the surface to be measured of a sheet in movement, such as a sheet of glass or a strip of glass moving in its plane.

13. Device according to Claim 12, characterised in that the deformable surface is that of a roller which is in rotation and whose surface movement speed in contact with the moving sheet is of the same order as that of the said sheet.

14. Device according to one of Claims 10 to 13, characterised in that the light source is a point source, in that it produces the shadow of the surface to be measured on a screen and in that a CCD camera evaluates the projected image.
